# EUROPEAN PATENT APPLICATION

(11) **EP 4 455 201 A1**
(43) Date of publication of application: **30.10.2024**
(21) Application number: 24171870.9
(22) Date of filing: 23.04.2024
(51) Int. Cl.: C08K 3/22, C08L 33/08, C08K 3/36, C09D 4/00, B29C 64/135, B33Y 70/10

(54) **NANO COMPOSITIONS OF PHOTO-CURABLE RESINS AND ASSOCIATED METHOD FOR THE CREATION OF MOLDING MATRICES FOR THE MANUFACTURE OF CERAMIC PRODUCTS, IN PARTICULAR TILES**

(30) Priority: 28.04.2023 IT 202300008349
(71) Applicant: MAT3D S.r.l., 42124 Reggio Emilia (IT)
(72) Inventor: BONDIOLI, Federica, 42124 REGGIO NELL'EMILIA (RE) (IT); GONZALEZ, Gustavo, 42124 REGGIO NELL'EMILIA (RE) (IT); MARUCCIA, Elisa, 42124 REGGIO NELL'EMILIA (RE) (IT); MESSORI, Massimo, 42124 REGGIO NELL'EMILIA (RE) (IT)
(74) Representative: Studio Torta S.p.A.

(57) **Abstract**

A photocurable composition and associated method for producing polymer coatings on a metal substrate like molding matrices for ceramic products, wherein the photocurable composition includes at least one (meth)acrylate, inorganic nanoparticles, at least one free-radical photo initiator, and at least one amine synergist; wherein the photocurable composition is deposited on a metal substrate, forming a coating layer with a prefixed three-dimensional texture, before photo-polymerizing it using UV/VIS radiation.

## Description

### Cross-reference to related applications

This patent application claims priority from Italian patent application no. 102023000008349 filed on 28 April 2023, the entire disclosure of which is incorporated herein by reference.

### Technical field of the invention

This invention relates to photocurable resin compositions having formulations that include nano-components and such as to provide high mechanical and abrasion resistance to them.

The invention also relates to an associated method for producing molding matrices, for example continuous belt matrices, which can be used on machines for producing ceramic products, particularly tiles, characterized by the presence of relief textures (drawings or other graphic symbols).

### Prior art

Today, significant innovation concerns the sector of machines for producing ceramic tiles. The introduction of new materials, the evolution of industrial automation and digitalisation of control systems mean that plants exhibit performance never before attained in terms of production and energy efficiency, as well as environmental sustainability. At the same time, a greater capacity has developed in the ceramics sector in producing wide formats, with very high quality and creative graphics and aesthetics.

In this scenario, the introduction of photocurable polymer resins in manufacturing processes represents an element able to further accelerate innovation. In particular, these substances, which are liquid in their original state, react under UV irradiation and assume a solid form through photopolymerization mechanisms inherent to their chemical formulation. These compositions are relatively cost-effective and require limited energy consumption in their transformation from a liquid to a solid. In addition, the handling and management of these products are relatively simple and, thus, of great interest in producing molds and matrices dedicated to the ceramics sector.

These liquid and photocurable resins may be used to manufacture - by way of example - large matrices equipped with a polymer surface able to reproduce shapes and drawings on the ceramics before being fired ("green" ceramics) through pressing. These molds (or matrices) may be produced using sequential deposition on a metal substrate, for example consisting of metal plates or a belt, of a liquid, photocurable polymer resin, in a process known as additive manufacturing (AM) . After the deposition is carried out using nozzles (material jetting), the liquid formulation is processed (cured, i.e. photo-polymerized) by exposure to visible light or UV rays, for example using special lamp batteries, so as to obtain a film that covers the metal structure in the shapes and ways desired.

The benefit of AM (additive manufacturing) deposition consists in enabling the production not only of a flat coating (X and Y dimensions), but also the "vertical" development (Z dimension) of the structure, i.e. the modelling of the graphics along the third dimension too that makes it possible to produce more and more varied and specific patterns. Thanks to this process, it is possible to generate an almost infinite variety of shapes, graphics, and drawings, which may be reproduced on beds of ceramic particles, exerting strong pressure, for continuous tile production with the surface graphics desired.

Photocurable resin compositions intended for this purpose are known from WO2016071304A1. Nevertheless, these known compositions of photocurable resins are not entirely satisfactory. The ceramic tile production process mentioned above is actually characterized by extremely high-pressure levels. In addition, the production environment is typically distinguished by dust, high operating temperatures, and other aggressive agents. The polymer matrices used in these tough operating conditions need, therefore, to have significant capacities for abrasion resistance, as well as a good surface polish, so as to avoid the accumulation of ceramic particles on the polymer surface during pressing. None of these features are satisfied, or not sufficiently so, by the known photocurable resin compositions.

A photocurable resin composition containing protonated silica nanoparticles (silicon oxide) is also known from US8101673. This composition should be hard, highly resistant to scratches and wear, adhering well to a support, and, above all, highly transparent and capable of reduced light diffusion (haze).

US8101673 does not identify which practical use this composition has but, especially in its insistence on the last feature (reduced light diffusion), it can be deduced that it is a composition intended to coat a final product, like, for example, a tile, and cannot be used for producing molds for tiles.

In addition, from the description of US8101673 it is clear for the person skilled in the art that the photo-polymerizable compositions described in this document are not at all suitable for AM deposition, especially via "material jetting".

Finally, the presence of protonated silica (a component to be produced *ad hoc)* in a very high concentration (greater than 50.1% by weight calculated out of the total weight of the dry composition) results in a relatively costly product and, above all, unsuitable for creating graphic textures via additive manufacturing.

### Summary of the invention

The purpose of this invention is to provide a photocurable resin composition able to overcome all the drawbacks of the prior art. In particular, a photocurable resin composition formulated to use components that are readily available and cost-effective but, equally, once photo-polymerized, having high mechanical and abrasion resistance, and which is, above all, suitable for being deposited on a metal (or polymer) substrate by additive manufacturing techniques, for example via "inkjet" 3D jet printing to create polymer coatings on the substrate having good adherence and having graphic textures, including complex ones of great finesse.

It is, therefore, a purpose of the invention to provide a molding matrix, for example continuous belt matrices, which can be used on machines for the production of ceramic products, particularly tiles, the matrix being composed of a metal or polymer substrate and of a photocurable resin composition as defined above, which is photocured and polymerized in the solid state.

It is also a purpose of the invention to provide an associated method for producing molding matrices, for example continuous belt matrices, which can be used on machines for the production of ceramics, particularly tiles.

According to the invention, a photocurable resin composition in formulations suitable for additive manufacturing techniques, a molding matrix for ceramic elements, and an associated method are provided, as defined in the attached claims.

This invention therefore concerns the formulation of photocurable resins and the related method for producing polymer coatings on a metal (or polymer) substrate so as to obtain associated molding matrices, the above-mentioned formulations being innovative, advantageously usable for simply and quickly producing, with high precision, molding matrices for ceramic products, particularly for continuous tile production, obtained via additive and continuous manufacturing processes and are highly resistant to abrasion and having good surface finish.

The use of inorganic nanoparticles and of functional amine components, which are used as the main additives in these photocurable formulations is, in particular, a feature of the invention. These make it possible to guarantee, in polymer products, especially polymer coatings, a high resistance to abrasion and good surface polish, features that are especially interesting for operative and industrial processes that operate in conditions of high mechanical and thermal stress and in the presence of dust.

To guarantee these features, the object of this invention is based on producing photocurable and nano-composite resins, which have a low viscosity range, fast reaction kinetics, and low withdrawal, and which are able to provide, once polymerization is complete, a polymer surface or layer or coating with water-repellent features, good adhesive properties, good hardness, and excellent resistance to abrasion and wear.

The technological solution adopted in this invention was obtained using inorganic nanoparticles adopted as filler in a liquid formulation of a photocurable resin, based on functional (meth)acrylate groups, with low viscosity and shear thinning non-Newtonian behavior.

Here and hereinafter, "shear thinning" means a behavior of polymer resins in which the resistance of the fluid to flowing (its viscosity) is lowered as the shear stress (measured in rpm) increases. Behavior of this type is very suitable for all those applications in which there is "spraying" via material jetting or laying in films. This is because the viscosity decreases during the operating steps of the process (improving the "spraying"/laying) but increases once the film/layer has been deposited (keeping the fluid compact and avoiding excessive and not well predictive laying, especially in the event of highly structured configurations of the coating).

Here and hereinafter, the term "(meth)acrylate" refers to polymerizable compounds containing functional groups based either on acrylates or methacrylates, preferably both.

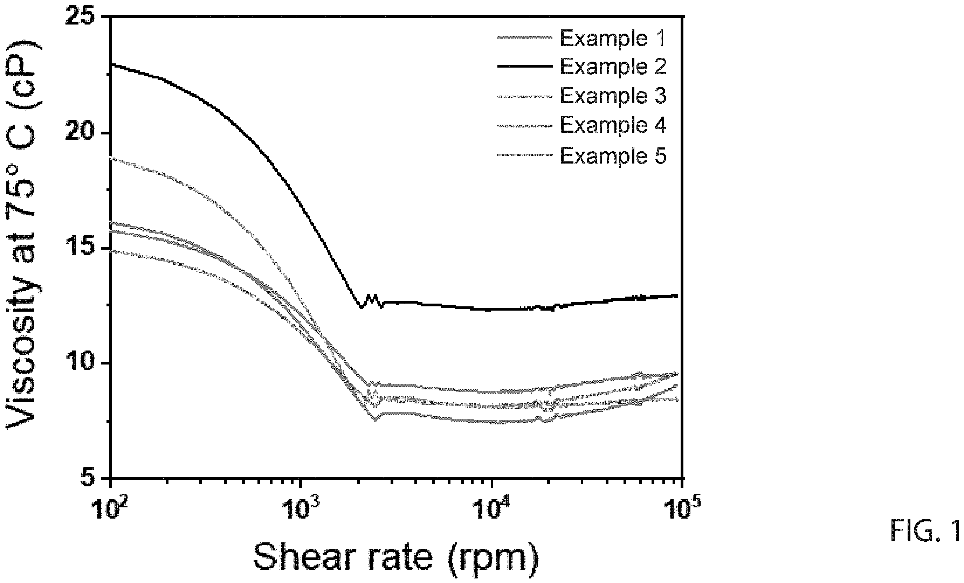

Here and hereinafter, "low viscosity" means a viscosity measured at 75°C, ranging between 7.5 and 23 cPs measured between 10² and 10⁵ rpm, as mentioned below with reference to Figure 1.

Here and hereinafter, "high hardness" means a Shore hardness of at least 75 degrees Shore D.

The inorganic material used is based on, but not limited to, nano-components (nanoparticles) selected from the group consisting of: silica (SiO₂), alumina, titanium oxide, mixtures thereof, preferably round in shape and having dimensions ranging between 10 and 90 nm (nanometres).

More generally, the photocurable resin composition of the invention is of the type comprising at least two ethylenically unsaturated compounds, at least one photo initiating compound, and at least one inorganic filler but, according to the main feature of the invention, the at least two ethylenically unsaturated compounds are chosen in the liquid state and consist of (meth)acrylates, i.e. of polymerizable compounds that have acrylate and/or methacrylate functional groups and, in combination, the inorganic filler consists of the above-mentioned inorganic nanoparticles, preferably made of silica (silicon oxide), alumina (aluminium trioxide, Al₂O₃), or titanium dioxide (TiO₂).

The photocurable resin composition is formulated so that, once applied on a metal or polymer substrate, photocured and polymerized, it creates a polymer coating, continuous or discontinuous, on the metal or polymer substrate which has high mechanical and abrasion resistance, i.e. of a high hardness, as defined above.

In particular, the photocurable composition of the invention is formulated so that, once applied on a metal or polymer substrate, photocured and polymerized, it creates a polymer coating, continuous or discontinuous, on the metal or polymer substrate which has sufficient mechanical and abrasion resistance to constitute, together with the metal or polymer substrate, a molding matrix for ceramic products, particularly tiles.

In particular, according to one aspect of the invention that cannot be neglected, the polymer coating obtained by the photocurable composition of the invention in the photocured and polymerized state must have a Young modulus ranging between 2,000 and 2,200 Mpa.

According to one aspect of the invention, the photocurable composition herein described therefore comprises:
- between 60% and 70& by weight of (meth)acrylate, i.e., polymerizable compounds having acrylate and/or methacrylate functional groups;
- between 25% and 35% by weight of inorganic nanoparticles;
- between 1% and 15% by weight of an amine synergist, preferably monofunctional;
- between 0.01% and 2% by weight of a polymerization inhibitor;
where the percentages by weight mentioned above relate to the total weight of the photocurable composition.

Merely by way of non-limiting example, the following can be used as the polymerization inhibitor: 4-tert-butylcatechol (TBC), 4-tert-butilpirocatecolo, 4-methoxyphenol (MEHQ), 2-tert-butyl-1,4-benzoquinone, tert-butylhydroquinone, butylated hydroxytoluene (BHT), and hydroquinone (HQ), 2,6-di-tert-butyl-p-cresol, copper(II) dibutyldithiocarbamate, 2,6-di-tert-butylphenol, 2-[1-(2-hydroxy-3,5-di-tert-pentyl-phenyl)ethyl)-4,6-di-tert-pentylphenyl acrylate, phenothiazine, 1,1-diphenyl-2-picrylhydrazyl, 1,4-benzoquinone, Tris(N-hydroxy-N-nitrosophenyl-aminate-O,O'alum.

According to one, non-secondary, aspect of the invention, the weight ratio between the content of inorganic nanoparticles and of (meth)acrylates must range between 0.4 and 0.6 (between 40% and 60%).

In fact, it has been found experimentally that, beyond this range, either the hardness features required are not obtained (and, thus, resistance to wear) or a fluid photocurable composition is obtained that does not have the features of viscosity, adhesion, and precision of deposition required.

The amine synergist consists of a linear, amine-based monofunctional (meth)acrylate with a molecular weight below 215 g/mol.

Linear means a non-branched (meth)acrylate and without lateral functional groups with non-negligible steric hindrance.

The amine synergist is chosen so as to also serve as a scavenger (capturer) of oxygen, to obtain a more appropriate viscosity for the application (less than 23 cPs), as well as to increase the flexibility of the final object given its linearity.

The photocurable composition of the invention also comprises at least one adhesion promoter, preferably in a quantity ranging between 1% and 5% by weight calculated out of the total weight of the photocurable composition.

The adhesion promoter consists of a monofunctional (meth)acrylate with a molecular weight of less than 270 g/mol provided with cyclical structures so as to confer at the final object a greater hardness (between 75 and 90 Shore D) and an acceptable viscosity (less than 23cPs) as well.

The photocurable composition of the invention is, finally, formulated so as to have, in the liquid state (uncured) a viscosity, measured at 75°C, ranging between 7.5 and 23 cPs (centi-Poise) between 10² and 10⁵ rpm (revolutions per minute).

In the technical solution adopted, the inorganic nanoparticles are uniformly suspended in a liquid, (meth)acrylate component. Liquid nanocomposites of this type are known, even if for other purposes, and are commercially available, for example under the name Nanocryl^{®}.

These commercial nanocomposite resins, based on functional (meth)acrylate groups, are able to be polymerized through photopolymerization processes, mixing them with photoinitiators and irradiating with mercury lamps or LEDs that emit in the UV and/or visible spectrum.

Other complementary (or additive) substances can be used for further defining the final properties of the photopolymerized matrices, such as: the level of surface finish, the adhesion of the substrate to the surfaces on which they are deposited, the consistency in the deposition step, like the low viscosity needed for the deposition process. These components are selected and added to the mixture, in accordance with specific applications.

In particular, as ethylenically unsaturated compounds are preferred liquid substances based on (meth)acrylate groups with low viscosity values, which provide the coating with good hardness, high resistance to abrasion, and good resistance to scratches. These substances, more than one, can have one or more (≥ 1) functional (meth)acrylate groups per molecule and may be of the kind: urethane methacrylate, polyester methacrylate, epoxy methacrylate, polyether methacrylate, silicon methacrylate, and their mixtures.

In particular, in order to achieve the features of the final coating according to one aspect of the invention, at least one bifunctional, linear ethylenically unsaturated compound provided with secondary carbons only and at least one bifunctional, linear ethylenically unsaturated compound provided with at least one quaternary carbon are preferred.

The combination of the two compounds is able to provide both the necessary stiffness for the coating and the flexibility, at the same time maintaining the viscosity at acceptable values for the application (material jetting).

Some non-limiting and non-exhaustive examples of compounds with at least one (≥ 1) functional (meth)acrylate group are: methyl methacrylate, butyl methacrylate, ethyl methacrylate, methacrylic acid and its salts, benzyl methacrylate, vinyl methacrylate, stearyl methacrylate, lauryl methacrylate, isobutyl methacrylate, propargyl acrylate, pentafluorophenyl methacrylate, isobornyl methacrylate, isodecyl methacrylate, tert butyl methacrylate, pentabromobenzyl methacrylate, 2-ethylhexyl methacrylate, methyl 2(hydroxymethyl) methacrylate, 2-carboxyethyl methacrylate, tetrahydrofurfuryl methacrylate, poly(ethylene) glycol, methyl ether methacrylate, behenyl methacrylate, octyl methacrylate, decyl methacrylate, ethylene glycol dicyclopentyl ether methacrylate, trimethylsilyl methacrylate, 2-hydroxyethyl methacrylate, glycidyl methacrylate, 4-hydroxybutyl methacrylate, polyethylene glycol dimethacrylate, ethylene glycol dimethacrylate, 1,6-hexanediol dimethacrylate, polycaprolactone dimethacrylate, glycerol 1, 3-diglycerolate dimethacrylate, bisphenol a ethoxylate dimethacrylate, 1,4-butanediol dimethacrylate, poly(propylene glycol) dimethacrylate, neopentyl glycol dimethacrylate, bisphenol A glycerolate dimethacrylate, trimethylolpropane ethoxylate methyl ether dimethacrylate, and their mixtures.

Some substances based on (meth)acrylate groups are used as functional additives in the photo-polymerizable formulation of the invention containing inorganic nanoparticles, so as to include specific features in the final, polymerized coating.

As already highlighted, in the object of this invention, monofunctional (meth)acrylate components based on amines are used both as polymerization synergists and as "oxygen scavengers". Other monofunctional (meth)acrylate components with cyclical structures are used both to reduce the withdrawal of the resin during photo-polymerization and for increasing the adhesion of the polymer with the metal substrate on which it will be deposited.

Merely by way of non-limiting and non-exhaustive example, as a possible adhesion promoter, the following may be used: isobornyl methacrylate, benzyl methacrylate, cyclohexyl methacrylate, glycidyl methacrylate, ethylene glycol phenyl ether methacrylate, 3,3,5-trimethylcyclohexyl methacrylate, tetrahydrofurfuryl methacrylate, ethylene glycol dicyclopentyl ether methacrylate, furfuryl methacrylate, phenyl methacrylate, 2-hydroxy-3-phenyl propyl acrylate, ethylene glycol ether methacrylate.

Again, merely by way of non-limiting and non-exhaustive example, the following can be used as amine synergists: 3-(dimethylamino)propyl methacrylate, diethylenetriamine, triethylenetriamine, acrylamide, 2-(dimethylamino)ethyl methacrylate, 2-[[(butylamino)carbonyl]oxy]ethyl acrylate, (Methacryl-L-Lysine), N-[3-(N,N-Dimethylamino)propyl]methacrylamide, N-(3-aminopropyl)methacrylamide hydrochloride, N-(2-aminoethyl) methacrylamide hydrochloride, 2-aminoethyl methacrylate hydrochloride, N-(3-BOC-aminopropyl methacrylamide, 2-(tert-butylamino)ethyl methacrylate, adipic dihydrazide, isophorone diamine.

In the formulations of a photo-polymerizable and nano-composite composition of this invention, Norrish type I or Norrish type II free-radical photo-initiators are preferably used. In any case, it is also possible to use "thermal initiators" in the composition of the invention in order to subsequently exploit the exothermia of the formulation.

Some non-limiting and non-exhaustive examples of Norrish type I and II photoinitiators include: 2-hydroxy-2-methylpropiophenone, 2-hydroxy-4'-(2-hydroxyethoxy)-2-methylpropiophenon, 1-hydroxycyclohexyl phenyl ketone, 1-[4-(2-hydroxyethoxy)-phenyl]-2-hydroxy-2-methyl-1-propan-1-one, oligo[2-hydroxy-2-methyl-1-[4-(1-methylvinyl)phenyl]propanone] and 2-hydroxy-2-methyl-1-phenylpropanone, oligo[2-hydroxy-2-methyl-1-[4-(1-methylvinyl) phenyl]propanone], 2, 2-dimethoxy-2-phenylacetophenone, 2-methyl-1-[4-methylthio)phenyl]-2-morpholinopropan-1-one, 2-benzyl-2-dimethylamino-4-morpholinobutyrophenone, diphenyl(2,4,6-trimethylbenzoyl)phosphine oxide, ethyl phenyl(2,4,6-trimethylbenzoyl)phosphinate, phenylbis (2,4,6-trimethylbenzoyl)-phosphine oxide, ethyl(3-benzoyl-2,4,6-trimethylbenzoyl)(phenyl) phosphinate, benzophenone, 4-methylbenzophenone, methyl-2-benzoylbenzoate, 4 4'-bis(diethylamino)benzophenone, 4-benzoyl-4'-methyldiphenyl sulfide, 4-phenylbenzophenone, 2-isopropylthioxanthone, 1-chloro-4-propoxythioxanthone, 2,4-diethylthioxanthone, methyl benzoylformate.

Some examples of thermal initiators include: 4,4-azobis(4-cyanovaleric acid), 1,1'-azobis (cyclohexanecarbonitrile), 2,2'-Azobisisobutyronitrile (AIBN), 2,2'-azobis(2-methylpropionitrile), benzoyl peroxide, Lauroyl peroxide.

The invention also relates to a method for producing polymer coatings on a metal (or polymeric) substrate having high abrasion resistance and good surface finish, which can be used to make molding matrices for ceramic products, particularly for continuous tile production.

The method of the invention comprises the steps of:
a) providing a photo-polymerizable (photocurable) composition in the fluid state like that described above, thus comprising between 60% and 70% by weight of at least one (meth)acrylate, i.e., polymerizable compounds having acrylate and/or methacrylate functional groups, between 250 and 35% by weight of inorganic nanoparticles, preferably chosen from the group consisting of silica, alumina, titanium oxide, mixtures thereof, and between 2% and 6% by weight of at least one free-radical photo initiator, from 1% to 5% by weight of adhesion promoters, between 1% and 15% by weight of an amine synergist and between 0.01% and 2% by weight of a polymerization inhibitor;
b) depositing, preferably by additive manufacturing techniques, the photocurable composition referred to above on a metal or polymer substrate to form a continuous or discontinuous coating layer having a predetermined three-dimensional texture; and
c) photo-polymerizing this photocurable composition by exposing the coating layer just deposited to electromagnetic radiation with a wavelength between 250 nm and 500 nm, and thus UV or within the visible spectrum.

Thanks to these features, the coating layer, after the irradiation step c), has a hardness ranging between 75 and 90 Shore D and a Young modulus ranging between 2,000 and 2,200 MPa.

The nano-composite, photo-polymerizable formulation of the invention is prepared by mixing first the liquid components under mechanical stirring at room temperature; the solid or powder components are subsequently dissolved under mechanical stirring. The nano-composite, photo-polymerizable formulation of this invention must be formulated so as to have a viscosity measured at 75°C ranging between 7.5 and 23 cPs at rpm ranging between 10² and 10⁵.

To proceed with polymerization of the nanocomposite formulation of this invention, a lamp with a UV or Visible light source is used with an emission range that can vary between 250 and 500nm of wavelength. The material made using the polymerization process suggested above has, as already highlighted, a hardness ranging between 75-90 Shore D and a Young modulus ranging between 2,000 and 2,200 MPa.

### Brief description of the drawings

Additional features and advantages of this invention, as well as exemplary embodiments of the teachings of this invention, will be clear from the following inventive and comparative practical embodiments, which are hereby included merely by way of non-limiting example of the invention and from the attached figure, in which:
- Figure 1 schematically illustrates a flux curve of the various embodiments as included below; the curves were obtained with an Anton Paar rheometer model MCR 702e MultiDrive at 75°C, with a plate-plate configuration (25 mm plate), frequency of 1 Hz and gap between plates of 0.5 mm.

### Detailed description

### Example 1:

The methacrylate-based nano-composite formulations listed in Table 1, wherein the nano-component consists of silica SiO₂, without functional groups, for example non-protonated, or alumina Al₂O₃, also without functional groups, are purchased on the market.

**TABLE 1**

| **Commercial name** | **Type of inorganic nanoparticles** | **Quantity of nanoparticles present (% weight)** | **Type of methacrylate dispersion liquid** | **Supplier** |
|---|---|---|---|---|
| Nanocryl^{®} C130 | Silica Nanoparticles (Dia. = 20 nm) | 50 | Cyclic trimethylolpropane formal acrylate (CTFA) | Evonik Industries AG |
| Nanocryl^{®} C140 | Silica Nanoparticles (Dia. = 20 nm) | 50 | Hexanediol diacrylate (HDDA) | Evonik Industries AG |
| Nanocryl^{®} C 145 | Silica Nanoparticles (Dia. = 20 nm) | 50 | Tripropylene glycol diacrylate (TPGDA) | Evonik Industries AG |
| Nanocryl^{®} C146 | Silica Nanoparticles (Dia. = 20 nm) | 50 | Neopentyl glycol propoxylate diacrylate | Evonik Industries AG |
| Nanocryl^{®} C150 | Silica Nanoparticles (Dia. = 20 nm) | 50 | Trimethylolpropane triacrylate (TMPTA) | Evonik Industries AG |
| Nanocryl^{®} C153 | Silica Nanoparticles (Dia. = 20 nm) | 50 | Trimethylolpropane ethoxy triacrylate (TMPEOTA) | Evonik Industries AG |
| Nanocryl^{®} C153-10 | Silica Nanoparticles (Dia. = 20 nm) | 50 | Trimethylolpropane ethoxy triacrylate (TMPEOTA) | Evonik Industries AG |
| Nanocryl^{®} C155 | Silica Nanoparticles (Dia. = 20 nm) | 50 | Glycerol propoxylate triacrylate (GPTA) | Evonik Industries AG |
| Nanocryl^{®} C 165 | Silica Nanoparticles (Dia. = 20 nm) | 50 | Pentaerythritol propoxylate tetraacrylate (PPTTA) | Evonik Industries AG |
| Nanocryl^{®} C350 | Silica Nanoparticles (Dia. = 20 nm) | 50 | Hydroxymethacrylate | Evonik Industries AG |
| Nanobyk-3601 | Alumina nanoparticles (Dia. = 40 nm) | 30 | Tripropylene glycol diacrylate (tpgda) | BYK |
| Nanobyk-3602 | Alumina nanoparticles (Dia. = 40 nm) | 30 | Hexanediol diacrylate (HDDA) | BYK |
| Nanobyk-3605 | Silica nanoparticles (Dia. = 20 nm) | 50 | Hexanediol diacrylate (HDDA) | BYK |

Using some of these compositions, additional components of a different type and in different quantities, as indicated in Table 2, are added to them, obtaining seven different fluid formulations of photo-polymerizable resin.

**TABLE 2**

| **Component** | **Example 1 (% weight)** | **Example 2 (% weight)** | **Example 3 (% weight)** | **Example 4 (% weight)** | **Example 5 (% weight)** | **Example 6 (% weight)** | **Example 7 (% weight)** |
|---|---|---|---|---|---|---|---|
| Silica nanoparticles (Dia. = 20 nm) | 31 | 32 | 32 | 30 | 31 | -- | -- |
| Alumina Nanoparticles (Dia. = 40 nm) | -- | -- | -- | -- | -- | 26 | 21 |
| Neopentyl glycol propoxylate diacrylate (NGPDA) | 33 | 20 | 33 | 28 | 21 | 15 | 15 |
| 1.6-hexanediol diacrylate (HDDA) | 32 | 45 | 31 | 30 | 31 | 54 | 49 |
| Isobornyl methacrylate (IBOMA) | -- | -- | -- | -- | 5 | -- | 3 |
| 2-(dimethylamine) ethyl methacrylate (DMAEMA) | -- | -- | -- | 5 | 5 | -- | 5 |
| Phenylbis(2,4,6-trimethylbenzoyl)pho sphineoxide (BAPO) | 3 | 2 | -- | -- | -- | -- | -- |
| Ethyl (2,4,6-trimethylbenzoyl) phenylphosphinate (TPO-L) | -- | -- | 3 | 4 | 4 | 4 | 4 |
| 2-Isopropylthioxanthon e (ITX) | -- | -- | -- | 2 | 2 | -- | 2 |
| Tris (N-hydroxy-N-nitrosophenyl-aminato-O,O'alumium + 2-Phenoxy ethyl acrylate (0515) | 1 | 1 | 1 | 1 | 1 | 1 | 1 |

### Example 2:

The fluid photocurable resin compositions made according to the invention and listed in Table 2 are each deposited, one at a time, on an identical flat and smooth metal substrate using 3D printing of the material jetting kind, creating on the substrate, on a case-by-case basis, a continuous coating having a 3D texture reproducing the same graphic symbol.

After the 3D printing step, using material jetting, the resulting layers of coating are irradiated using a mercury or LED lamp having an emission spectrum of 200-600 nm, but using a reduced radiant spectrum, ranging between 250 and 500 nm, until polymerization is complete, using a forward speed under the mercury lamp of 5-30 m/min and using a lamp with a selected emission power of approximately 10-200 mW/cm².

Once polymerization is complete, all the substrates equipped with photo-polymerized coating with 3D textures obtained as above, come to constitute, each, a respective molding matrix that can be obtained using additive manufacturing and suitable for producing tiles, having the features included in Table 3 in relation to examples 1-5, while examples 6 and 7 provide comparable values.

**TABLE 3**

| **Examples** | **Viscosity range at 75°C (mPa·sec)** | **Hardness (Shore D)** |
|---|---|---|
| 1 | 3.5-110 | 80-90 |
| 2 | 3.5-110 | 80-90 |
| 3 | 3.5-11 | 80-90 |
| 4 | 3.5-11 | 80-90 |
| 5 | 3.5-11 | 80-90 |

Owing to the specific combination of selected components combined in specific quantities, the photocurable composition of the invention makes it possible to produce matrices using polymer coating obtained with additive manufacturing processes (AM), by depositing of layers continuously on the metal (or polymer) surface. The nano-composite, photo-polymerizable formulation of the invention actually has low viscosity and high conversion ranges, features that are necessary for the deposition of the material using nozzles (material jetting) typical of industrial machinery that uses AM technology (additive manufacturing).

Finally, although only photocurable compositions containing silica nanoparticles as inorganic filler, in the amounts and dimensions illustrated above, were fully tested, it was found that commercial products containing alumina nanoparticles also have, once the specific additional components according to the preferred embodiments of the invention have been added, similar viscosity values. Taking into account that alumina and titanium dioxide nanoparticles have comparable hardness to that of silica, it is plausible that the silica nanoparticles may be replaced with alumina or titanium dioxide nanoparticles (or other materials with similar physical and chemical features) obtaining similar positive results.

In addition, the inorganic nanoparticles used according to the invention do not require manipulations, like the addition of functional groups, so that they are a more cost-effective and easier material to produce and use. In particular, the silica particles protonated according to US8101673 can result in compositions with excessively acid pH, which means their use on metal substrates is not advisable.

All the purposes of the invention are, therefore, achieved.

## Claims

1. A molding matrix for ceramic products, in particular tiles, which can be applied in continuous molding systems, comprising a metal or polymer substrate, preferably flexible and continuous, and a photocured and polymerized photocurable resin composition that was applied to the substrate for material jetting, of the type comprising at least two ethylenically unsaturated compounds, at least one photoinitiating compound, and at least one inorganic filler; **characterized in that,** in combination:
(i)-said at least two ethylenically unsaturated compounds are bifunctional and, before polymerization, are in a liquid state and consist of (meth)acrylates, i.e., one or more polymerizable compounds having acrylate and/or methacrylate functional groups;
(ii)- said filler consists of inorganic nanoparticles, preferably selected in the group consisting of: silica, alumina, titanium oxide, mixtures thereof;
(iii)- said photocurable resin composition having been formulated so that when applied to said metal or polymer substrate, and after having been photocured and polymerized, it creates a continuous or discontinuous polymeric coating on the substrate that is sufficiently flexible and has sufficient mechanical and abrasion resistance to enable the molding of ceramic products, notably with a hardness ranging between 75 and 90 Shore D and a Young module ranging between 2,000 and 2,200 MPa.

2. The photocurable composition for obtaining a molding matrix for ceramic products according to claim 1, **characterized in that** it is formulated so that, when applied to a metal or polymer substrate, and after having been photocured and polymerized, it creates a continuous or discontinuous polymeric coating on the substrate with sufficient mechanical and abrasion resistance to constitute, together with the substrate, said molding matrix for ceramic products, particularly tiles; said photocurable composition comprising:
- between 60% and 70& by weight of at least two (meth)acrylates, i.e., polymerizable compounds having acrylate and/or methacrylate functional groups, or a mixture of (meth)acrylates; and
- between 25% and 35% by weight of said inorganic nanoparticles;
- said percentages by weight referring to the total weight of the photocurable composition, and wherein
- the weight ratio between the content of said inorganic nanoparticles and of said at least one (meth)acrylate is between 0.4 and 0.6 (between 40% and 60%).

3. The photocurable composition according to claim 2, **characterized in that** it further comprises at least one synergist consisting of an amine compound, said at least one synergist consisting of a monofunctional amine-based (meth) acrylate with a molecular weight of less than 215 g/mol.

4. The photocurable composition according to claim 3, **characterized in that** it contains an amount by weight of said amine synergist between 1% and 15% calculated on the total weight of the photocurable composition; said amine synergist being selected so as to also serve as a scavenger (capturer) of oxygen and to obtain a viscosity of less than 23 cPs, other than increasing the flexibility of the final object.

5. The photocurable composition according to any one of claims from 2 to 4, **characterized in that** it further comprises at least one polymerization inhibitor, in an amount between 0.01 and 2 wt% calculated on the total weight of the photocurable composition.

6. The photocurable composition according to any one of claims from 2 to 5, **characterized in that** it further comprises at least one adhesion promoter, preferably in an amount between 1% and 5% by weight calculated on the total weight of the photocurable composition; said adhesion promoter consisting of a monofunctional (meth)acrylate weighing less than 270 g/mol and provided with cyclical structures that give the final object improved hardness, between 75 and 90 Shore D and a viscosity below 23 cPs.

7. The photocurable composition according to any one of claims from 2 to 6, **characterized in that** said inorganic nanoparticles preferably exhibit a round shape and have a size between 10 and 90 nm (nanometers).

8. The photocurable composition according to any one of claims from 2 to 7, **characterized in that** it is formulated to exhibit in its fluid (uncured) state a viscosity, measured at 75°C, between 7.5 and 23 cPs (centi-Poise) at rpm ranging between 10² and 10⁵.

9. A method for producing polymer coatings on a metal or polymer substrate having high abrasion resistance and good surface finish, which can be used to make molding matrices for ceramic products, particularly for continuous tile production, the method being **characterized in that** it comprises the steps of:
(a) providing a photo-polymerizing (photocurable) composition in the fluid state comprising between 60% and 70% by weight of at least two (meth)acrylates, i.e., polymerizable compounds having acrylate and/or methacrylate functional groups, between 25% and 35% by weight of inorganic nanoparticles, preferably selected from the group consisting of silica, alumina, titanium oxide, mixtures thereof, and between 1% and 15% by weight of an amine synergist;
(b) depositing by additive manufacturing techniques, especially material jetting, said photocurable composition on a metal or polymer substrate to form a continuous or discontinuous coating layer having a predetermined three-dimensional texture;
(c) photo-polymerizing said photocurable composition by exposing said coating layer to an electromagnetic radiation having a wavelength between 250 nm and 500 nm.

10. The method according to claim 9, **characterized in that** said coating layer, after said step (c), has a hardness between 75 and 90 Shore D and a Young module ranging between 2,000 and 2,200 MPa; said photocurable composition provided in said step (a) further comprising: between 2% and 6% by weight of at least one free-radical photo initiator, from 1% to 5% by weight of adhesion promoters, and between 0.01% and 2% by weight of a polymerization inhibitor.

11. The method according to claim 9 or 10, **characterized in that** said photocurable composition provided in step a) is formulated to exhibit in its fluid (uncured) state a viscosity, measured at 75°C, between 7.5 and 23 cPs (centi-Poise) at rpm ranging between 10² and 10⁵.

12. The method according to one of claims 9 to 11, **characterized in that** said amine synergist consists of a monofunctional amine-based (meth)acrylate.
